# EUROPÄISCHE PATENTSCHRIFT

(11) **EP 1 088 704 B1**
(45) Veröffentlichungstag und Bekanntmachung des Hinweises auf die Patenterteilung: **09.11.2005**
(21) Anmeldenummer: 00116568.7
(22) Anmeldetag: 01.08.2000
(51) Int. Cl.: B60R 9/058

(54) **Flächiges Karosserieteil mit einem Lastenträger für ein Fahrzeug**
Flat body part with a load carrier for a vehicle
Partie surfacique de carrosserie comportant un porte-charges pour un vèhicule

(30) Priorität: 30.09.1999 DE 19947237
(43) Veröffentlichungstag der Anmeldung: 04.04.2001
(73) Patentinhaber: ArvinMeritor GmbH, 63128 Dietzenbach (DE)
(72) Erfinder: Grimm, Rainer, Dipl.-Ing., 60599 Frankfurt (DE); Böhm, Horst, Dipl.-Ing., 60599 Frankfurt (DE)
(74) Vertreter: Oppermann, Mark

(56) Entgegenhaltungen:
- EP-A- 0 338 633
- EP-A- 0 945 307
- WO-A-01/00450
- WO-A-96/31366
- DE-A- 3 202 594
- DE-A- 3 614 740
- DE-A- 4 027 452
- DE-A- 19 709 016
- DE-C- 4 423 607

## Beschreibung

Die Erfindung bezieht sich auf ein flächiges Karosserieteil mit einem Lastenträger für ein Fahrzeug, gemäß dem Oberbegriff des Patentanspruchs 1. Ein solches Karosserieteil ist aus der DE 19 709 016 A bekannt. Insbesondere bezieht sich die Erfindung auf ein Dach eines Kraftfahrzeugs, an bzw. auf dem ein Lastenträger lösbar befestigt ist.

Dachlastenträger finden in unterschiedlichster Ausgestaltung Verwendung, um Dachlasten, wie Containerboxen, Fahrräder, Boote, Skier u.dgl. an bzw. auf dem Dach eines Fahrzeugs zu transportieren. Im allgemeinen sind dabei zwei Dachlastenträger mit jeweils einer langgestreckten Traverse vorgesehen, die sich in Querrichtung des Fahrzeugs über dessen Dach hinweg erstreckt und an beiden Enden mit jeweils einem Lastenträgerfuß versehen ist. Mittels der Lastenträgerfüße sind die zwei Dachlastenträger in Längsrichtung des Fahrzeugs beabstandet an dem Fahrzeug befestigt.

Im Stand der Technik fehlt es nicht an Vorschlägen, wie eine solche Lastenträgerfußbefestigung auszubilden ist. Für ein mit einer Dachreling versehenes Fahrzeugdach hat die Quertraverse des Dachlastenträgers klemmen- oder schellenartige Endabschnitte, die die Dachreling im montierten Zustand des Dachlastenträgers in Quer- und Höhenrichtung des Fahrzeugs formschlüssig und in Längsrichtung des Fahrzeugs reibschlüssig umfassen.

Für Fahrzeugdächer mit äußerer Dachrinne sind Lastenträgerfüße bekannt (DE 1 266 157 A), die ein im wesentlichen T-förmiges Befestigungsblech aufweisen, welches mit einem Gummi- oder Plastikschutz versehen in die Dachrinne eingesetzt wird. Ferner ist hier ein nach innen abgewinkeltes Verschlußteil vorgesehen, welches mittels einer Schraube, die das Verschlußteil durchgreift und in das Befestigungsblech eingeschraubt ist, gegen das Befestigungsblech gezogen werden kann. Im am Fahrzeugdach befestigten Zustand des Lastenträgerfußes bildet die Dachrinne ein Widerlager für das Verschlußteil aus, d.h. das Verschlußteil liegt an der Außenseite der Dachrinne an und das Befestigungsblech wird über die Schraubverbindung zwischen Verschlußteil und Befestigungsblech in die zwischen Verschlußteil und Befestigungsblech liegende Dachrinne gezogen.

Ein Nachteil dieses Stands der Technik wird darin gesehen, daß bei der hier ebenfalls in Längsrichtung des Fahrzeugs vorliegenden Reibschlußverbindung zwischen Dachrinne einerseits und Befestigungsblech bzw. Verschlußteil andererseits eine Kräfteaufnahme in Längsrichtung des Fahrzeugs nur bedingt möglich ist. Wird der Dachlastenträger in Längsrichtung des Fahrzeugs übermäßig belastet, erfolgt eine Längsverschiebung des Lastenträgerfußes bezüglich des Fahrzeugdachs, wobei sich die Dachlasten vom Dachlastenträger lösen und/oder Kratzer in der Lackierung des Fahrzeugdachs entstehen können.

Die gleiche Problematik besteht auch bei bekannten Lastenträgersystemen für modernere Fahrzeuge, welche in der Regel keine äußere Dachrinne mehr aufweisen. Solche Systeme haben Lastenträgerfüße, die mit beispielsweise einem Gummipuffer versehen auf das Fahrzeugdach aufgesetzt werden können. Die Befestigung des Lastenträgerfußes am Fahrzeugdach erfolgt hier mittels eines nach innen abgewinkelten Halteblechs, welches über eine Schraubverbindung zum Lastenträgerfuß in Richtung des Lastenträgerfußes gezogen werden kann, wobei der abgewinkelte Bereich des Halteblechs in den Türausschnitt des Fahrzeugs eingreift, um den Dachrahmen des Fahrzeugs zu hintergreifen. Weitere Nachteile dieses Stands der Technik sind darin zu sehen, daß, wenn das Halteblech über die Schraubverbindung zu stark an den Lastenträgerfuß heran gezogen wird, Beulen in das Fahrzeugdach gedrückt werden können, und daß infolge des Eingreifens des Halteblechs in den Türausschnitt Undichtigkeiten an der Türdichtung und/oder bei höherer Fahrzeuggeschwindigkeit starke Geräuschentwicklungen im Eingriffsbereich entstehen können.

Schließlich sind auch Lastenträgerbefestigungen vorgeschlagen worden (DE 32 02 594 A, DE 37 20 403 A), bei denen Befestigungselemente für die Lastenträgerfüße in der Außenschale des Fahrzeugdachs ausgebildete Öffnungen durchgreifen. Ist kein Lastenträger am Fahrzeugdach montiert, beeinträchtigen diese Öffnungen das optische Erscheinungsbild des Fahrzeugdachs erheblich, auch wenn sie mittels Stopfen verschlossen sind, wie in der DE 32 02 594 A vorgeschlagen. Darüber hinaus sind diese Öffnungen relativ aufwendig abzudichten, damit kein Wasser in den Fahrzeuginnenraum gelangen kann bzw. die Öffnungsränder bei Außenschalen aus Stahlblech nicht korrodieren. Letztendlich geht von Befestigungselementen, die auch bei abgenommenem Lastenträger von der Dachschale nach außen vorstehen, wie gemäß der DE 37 20 403 A vorgesehen, eine nicht unerhebliche Verletzungsgefahr aus.

Der Erfindung liegt die Aufgabe zugrunde, ein flächiges Karosserieteil mit einem Lastenträger für ein Fahrzeug zu schaffen, bei dem der Lastenträger einfach und sicher am Fahrzeug befestigt werden kann, ohne daß die oben geschilderten Probleme bestehen.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 10.

Erfindungsgemäß umfaßt ein flächiges Karosserieteil mit einem Lastenträger für ein Fahrzeug, wobei das flächige Karosserieteil eine tiefgezogene Außenschale und eine der Außenschale aufgeschäumte Innenschale aus einem Schaumkunststoff aufweist und sich zwischen einem fahrzeugseitigen Karosserierahmen und dem diesem zugeordneten flächigen Karosserieteil ein Spalt befindet, ein an der Innenschale mit angeschäumtes Befestigungselement zur lösbaren Befestigung des Lastenträgers, insbesondere Dachlastenträgers, an dem Fahrzeug, wobei der Lastenträger einen Trägerkörper aufweist, an dem zwei im nicht-befestigten Zustand des Lastenträgers relativ zueinander bewegliche Halteelemente vorgesehen sind, die im befestigten Zustand des Lastenträgers in den Spalt eingreifen, wo sie das Befestigungselement formschlüssig hintergreifen, welches am Karosserierahmen festgelegt ist und somit auch der Befestigung des flächigen Karosserieteils am Karosserierahmen dient.

Im Ergebnis wird der Lastenträger in Längsrichtung des Fahrzeugs durch den formschlüssigen Eingriff der Halteelemente mit dem Befestigungselement gesichert, in Querrichtung des Fahrzeugs hingegen, in der im Gebrauch des Lastenträgers die geringsten Kräfte zu erwarten stehen, durch Eingriff der Halteelemente in den Spalt zwischen dem fahrzeugseitigen Karosserierahmen und dem diesem zugeordneten flächigen Karosserieteil. In Höhenrichtung des Fahrzeugs wirkende Kräfte werden schließlich über die Halteelemente bzw. das Befestigungselement am fahrzeugseitigen Karosserierahmen abgestützt. Somit ist der Lastenträger in Längs-, Quer- und Höhenrichtung des Fahrzeugs zuverlässig und sicher am Fahrzeug festgelegt, wobei keine durch die Befestigung des Lastenträgers bedingten Schäden am flächigen Karosserieteil, z.B. Lackschäden oder Beulen, zu befürchten sind. Weiterhin berührt die vorgeschlagene Befestigung des Lastenträgers die Türdichtungen in keinster Weise. Auch braucht das über den Spalt zwischen Karosserierahmen und flächigem Karosserieteil zugängliche Befestigungselement bei abgenommenem Lastenträger in vorteilhafter Weise nicht über das flächige Karosserieteil vorstehen.

Da das Befestigungselement für den Lastenträger an der Innenschale mit angeschäumt ist, sind keinerlei zusätzliche Arbeitsschritte vonnöten um das Befestigungselement am fahrzeugseitigen Karosserierahmen festzulegen.

Nachdem das Befestigungselement nicht nur der Befestigung des Lastenträgers am Fahrzeug, sondern auch der Befestigung des flächigen Karosserieteils am Karosserierahmen dient, erfüllt das Befestigungselement vorteilhaft eine Doppelfunktion.

Der Patentanspruch 2 sieht vor, daß das Befestigungselement über eine äußere Aufkantung der Außenschale hinaus von dem flächigen Karosserieteil in den Spalt zwischen Karosserierahmen und Karosserieteil vorsteht. Dies begünstigt zum einen eine einfache und unkomplizierte Gestaltung und Montage der Halteelemente, die nicht besonders abgewinkelt zu sein brauchen und zur Montage einfach von oben in den Spalt einzuführen sind. Zum anderen kann das über das flächige Karosserieteil vorstehende Befestigungselement vorteilhaft auch als Handhabungsabschnitt für die Montage des Karosserieteils am Karosserierahmen dienen.

Zweckmäßig besteht das Befestigungselement aus einem metallischen Werkstoff, wie im Patentanspruch 3 angegeben, und ist mit mindestens einem Innengewindeabschnitt versehen, in den eine Schraube eingeschraubt ist, die im am Karosserierahmen montierten Zustand des flächigen Karosserieteils einen Flansch des Karosserierahmens durchgreift.

Nach der Lehre des Patentanspruchs 4 sind die Halteelemente Blechteile, die an ihren in den Spalt eingreifenden Enden hakenartig ausgebildet sind, wobei die hakenartig ausgebildeten Enden im befestigten Zustand des Lastenträgers komplementär geformte Aussparungen des Befestigungselements formschlüssig hintergreifen. Die Halteelemente können so einfach und kostengünstig durch Stanzen bzw. Feinschneiden und Biegen ausgebildet werden.

In einer vorteilhaften Ausgestaltung gemäß Patentanspruch 5 ist das eine Halteelement fest am Trägerkörper angebracht, während das andere Halteelement verschwenkbar am Trägerkörper angelenkt ist, wobei eine Einrichtung zum wahlweisen Ziehen des verschwenkbaren Halteelements in Richtung des festen Halteelements vorgesehen ist. Zweckmäßig hat dabei jedes Halteelement ein Widerlager mit einer Öffnung und die Einrichtung zum wahlweisen Ziehen des verschwenkbaren Halteelements in Richtung des festen Halteelements weist eine Kopfschraube und eine Mutter auf, wie im Patentanspruch 6 angegeben, wobei sich die Schraube durch die Öffnungen der Widerlager hindurch erstreckt und mit ihrem Kopf an dem einen Widerlager anliegt, während das über das andere Widerlager vorstehende Ende der Schraube in die am anderen Widerlager drehfest angeordnete Mutter eingedreht ist. Somit können die Halteelemente durch Einschrauben der Schraube in die Mutter auf definierte und einfache Weise mit dem Befestigungselement verspannt werden. Ist dabei am Außenumfang der Schraube eine Schraubendruckfeder angeordnet, wie im Patentanspruch 7 angegeben, die sich endseitig an den Widerlagern der Halteelemente abstützt, um eine die Halteelemente auseinanderdrückende Kraft aufzubringen, gestaltet sich auch das Lösen der Halteelemente vom Befestigungselement einfach. Die Schraubendruckfeder bewirkt, daß bei einem Herausdrehen der Schraube aus der Mutter das Widerlager des einen Halteelements am Kopf der Schraube und das Widerlager des anderen Halteelements an der Mutter gehalten wird, so daß sich die Halteelemente im Ergebnis voneinander und somit auch aus ihrem formschlüssigen Eingriff mit dem Befestigungselement entfernen.

Der Patentanspruch 8 sieht vor, daß die Halteelemente mittels einer lösbar am Trägerkörper befestigten Abdeckung aus vorzugsweise Kunststoff verkleidet sind. Diese Abdeckung, die dem Fahrzeug in ihrer äußeren Gestaltung bzw. ihrem Design den optischen und aerodynamischen Erfordernissen entsprechend angepaßt sein kann, verhindert, daß die Befestigungsvorrichtung verschmutzt, und gewährleistet somit deren Funktion auf Dauer.

Grundsätzlich kann der Trägerkörper bei am Fahrzeug montiertem Lastenträger von dem flächigen Karosserieteil beabstandet sein, weil die Befestigung des Lastenträgers am Fahrzeug mittels der Halteelemente und dem Befestigungselement wie oben beschrieben alleine im Spalt zwischen dem fahrzeugseitigen Karosserierahmen und dem diesem zugeordneten Karosserieteil erfolgt. Zweckmäßig liegt der Trägerkörper aber dem Karosserieteil flächig auf, wie im Patentanspruch 9 angegeben, was u.a. die Montage des Lastenträgers am Fahrzeug erleichtert. Dabei kann zwischen Trägerkörper und Karosserieteil eine weiche Zwischenschicht aus beispielsweise Gummi vorgesehen sein, damit ein Verkratzen der Oberfläche des Karosserieteils auch bei dieser Ausgestaltung jedenfalls ausgeschlossen ist.

Die Quertraverse des Lastenträgers kann schließlich in an sich bekannter Weise am Trägerkörper befestigt sein, etwa indem der Trägerkörper einen Hohlprofilabschnitt aufweist, dessen Innenquerschnitt komplementär zum Außenquerschnitt der Quertraverse ausgebildet ist, wobei sich die Quertraverse durch den Hohlprofilabschnitt hindurch erstreckt und bezüglich des Hohlprofilabschnitts mittels einer am Hohlprofilabschnitt vorgesehenen Schraube lösbar festgelegt ist, damit der Abstand von an beiden Enden der Quertraverse vorgesehenen Trägerkörpern den Fahrzeugdimensionen entsprechend variiert werden kann. Vorzugsweise ist die Quertraverse des Lastenträgers aber über ein elastisches Pufferelement am Trägerkörper befestigt, wie im Patentanspruch 10 angegeben, was zur Dämpfung bzw. Entkopplung von Schwingungen beiträgt, die insbesondere bei höherer Geschwindigkeit des Fahrzeugs infolge der Luftumströmung der auf der Quertraverse befestigten Lasten auftreten und in die Quertraverse eingeleitet werden. Ist hier eine Längenverstellbarkeit der Quertraverse erwünscht, kann dazu die Quertraverse teleskopisch ausgebildet sein.

Die Erfindung wird nachfolgend anhand eines bevorzugten Ausführungsbeispiels unter Bezugnahme auf die beigefügte Zeichnung näher erläutert. Darin zeigen:
- Fig. 1: eine schematische Perspektivansicht eines an einer PKW-Karosserie angebrachten Fahrzeugdachs als erfindungsgemäßes Karosserieteil, an dem ein Lastenträger montiert ist,
- Fig. 2: eine abgebrochene Schnittansicht entsprechend der Linie II-II in Fig. 1,
- Fig. 3: eine seitlich abgebrochene und teilweise aufgebrochene Schnittansicht entsprechend der Linie III-III in Fig. 2 und
- Fig. 4: einen seitlich abgebrochenen Schnitt entsprechend der Linie IV-IV in Fig. 2.

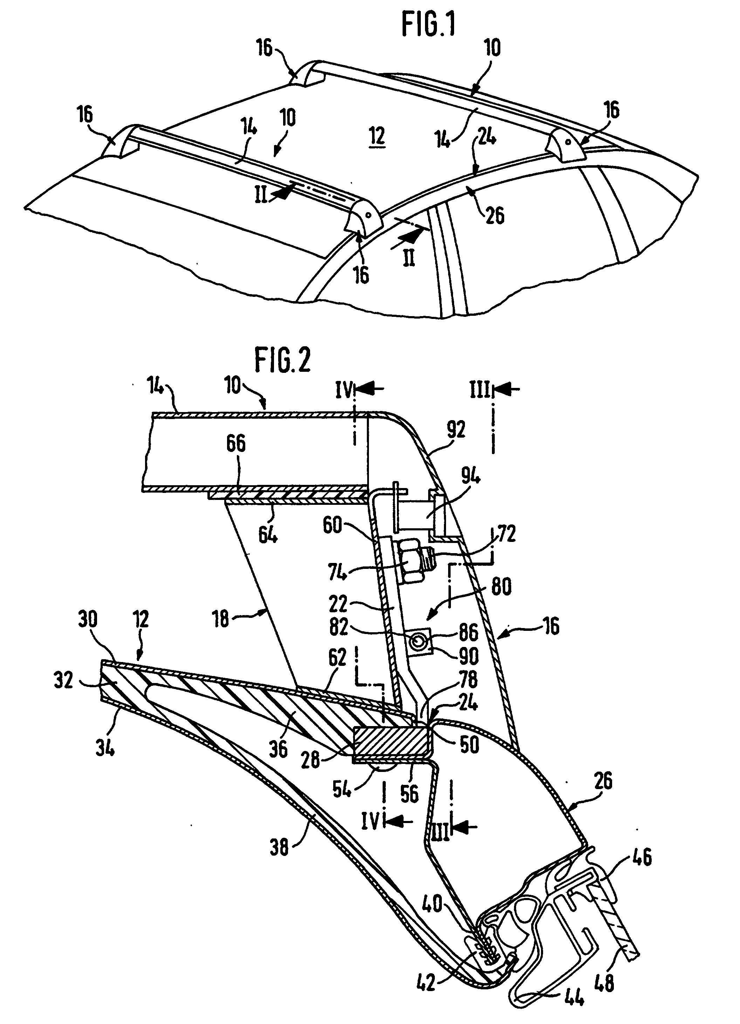

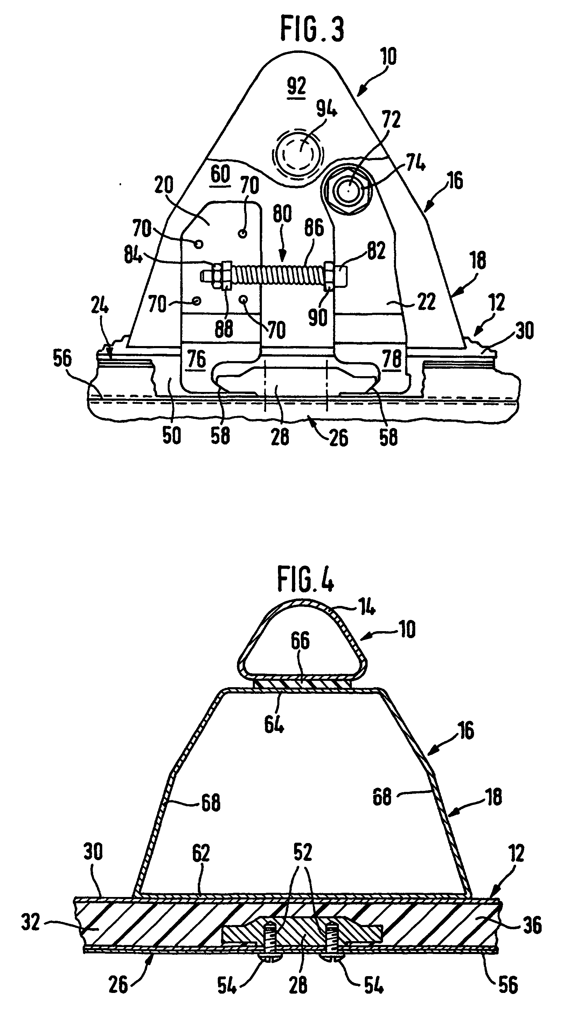

In Fig. 1 ist schematisch ein aus zwei Lastenträgern 10 bestehendes Lastenträgersystem gezeigt, welches an einem Fahrzeugdach 12 befestigt ist. Die Lastenträger 10 sind in Längsrichtung des Fahrzeugs beabstandet und weisen jeweils eine Quertraverse 14 auf, die an ihren Enden mit jeweils einem Lastenträgerfuß 16 verbunden ist. Wie in den Fig. 2 und 3 näher dargestellt, hat der Lastenträgerfuß 16 einen Trägerkörper 18, an dem zwei im nicht-befestigten Zustand des Lastenträgers 10 relativ zueinander bewegliche Halteelemente 20, 22 vorgesehen sind. Im dargestellten befestigten Zustand des Lastenträgers 10 greifen die Halteelemente 20, 22 in einen Spalt 24 zwischen einem fahrzeugseitigen Karosserierahmen 26 und dem letzterem zugeordneten flächigen Fahrzeugdach 12 ein, wo sie ein am Karosserierahmen 26 festgelegtes Befestigungselement 28 formschlüssig hintergreifen, wie nachfolgend noch näher beschrieben werden wird.

Das Fahrzeugdach 12 weist eine aus einem metallischen Werkstoff, z.B. Stahlblech, oder Kunststoff tiefgezogene Außenschale bzw. Dachhaut 30 und eine damit sandwichartig verbundene Innenschale 32 auf, die aus einem Schaumkunststoff, beispielsweise einem PUR-Schaumstoff gebildet ist. Die Innenfläche der Innenschale 32 ist zur Ausbildung des Dachhimmels mit einem textilen oder folienartigen Bezugsmaterial 34 beschichtet. Ferner ist die Innenschale 32 im Bereich der zur Auflage auf den Karosserierahmen 26 vorgesehenen Außenränder des Fahrzeugdachs 12 in zwei Schichten 36, 38 aufgeteilt, von denen die obere Schicht 36 auf den Karosserierahmen 26 abgedichtet aufgelegt ist, während die untere Schicht 38 über die Außenränder des Fahrzeugdachs 12 vorsteht. Die zur Verkleidung des Karosserierahmens 26 ausgebildete untere Schicht 38 ist für den Durchtritt durch die von dem Karosserierahmen 26 begrenzte Karosserieöffnung nach unten ohne bleibende Deformation umbiegbar, an die nach unten bzw. innen weisenden Flächen des Karosserierahmens 26 angelegt und mittels einer auf einen unteren Flansch 40 des Karosserierahmens 26 aufgesteckten inneren Türdichtung 42 am Karosserierahmen 26 festgelegt. Zum besseren Verständnis sind in Fig. 2 noch ein Türrahmen 44, eine äußere Türdichtung 46 und eine Türscheibe 48 angedeutet. Deutlich zu erkennen ist hier, daß die Befestigung des Lastenträgers 10 den Türdichtbereich nicht beeinflußt.

Wie den Fig. 2 bis 4 zu entnehmen ist, hat das vorzugsweise aus einem metallischen Werkstoff bestehende Befestigungselement 28 im wesentlichen die Form eines Quaders, ist an der oberen Schicht 36 der Innenschale 32 mit angeschäumt und steht über eine an dieser Stelle entsprechend ausgesparte äußere Aufkantung 50 der Außenschale 30 hinaus von dem Fahrzeugdach 12 vor, derart, daß das Befestigungselement 28 im dargestellten, am Karosserierahmen 26 montierten Zustand des Fahrzeugdachs 12 in den Spalt 24 hineinragt und sich bis zu der dem Befestigungselement 28 zugewandten Seitenfläche des Karosserierahmens 26 erstreckt. Weiterhin ist in den Fig. 2 und 4 zu erkennen, daß das sowohl der Befestigung des Lastenträgers 10 am Fahrzeug als auch der Befestigung des Fahrzeugdachs 12 am Karosserierahmen 26 dienende Befestigungselement 28 mit zwei Innengewindeabschnitten 52 versehen ist, in die jeweils eine Schraube 54 eingeschraubt ist, welche eine entsprechende Öffnung in einem aufgedoppelten oberen Auflageflansch 56 des Karosserierahmens 26 durchgreift. Diese Schrauben 54 sind auch nach erfolgter Montage des Fahrzeugdachs 12 am Karosserierahmen 26 noch durch Lösen der unteren Schicht 38 der Innenschale 32 von der inneren Türdichtung 42 und Herunterbiegen der unteren Schicht 38 zugänglich. Schließlich hat das Befestigungselement 28, wie der Draufsicht gemäß Fig. 3 zu entnehmen ist, an seinem über die Aufkantung 50 hinaus in den Spalt 24 hineinragenden Abschnitt zu beiden Seiten eine in der Art eines Hinterschnitts ausgebildete Aussparung 58, in die im montierten Zustand des Lastenträgers 10 das jeweilige Halteelement 20 bzw. 22 formschlüssig eingreift.

Bei dem Trägerkörper 18 handelt es sich um ein hohles, zum Fahrzeugdach 12 hin, d.h. in Fig. 2 nach links offenes Blechteil aus vorzugsweise Stahlblech, mit einer Stirnwand 60 zum Lagern der Halteelemente 20, 22, einer unteren Wand 62, welche unter Zwischenlage einer weichen Gummischicht (zur Vereinfachung der Darstellung in den Figuren nicht gezeigt) dem Fahrzeugdach 12 flächig aufliegt (siehe Fig. 2 und 4), einer oberen Wand 64, an der die im Querschnitt im wesentlichen die Form eines Dreiecks aufweisende, aus einem gezogenen Stahlprofilabschnitt gebildete Quertraverse 14 über ein elastisches Pufferelement 66 aus z.B. Gummi befestigt ist, sowie zwei symmetrisch ausgebildeten Seitenwänden 68, welche die Stirnwand 60, die untere Wand 62 und die obere Wand 64 miteinander verbinden und einen Winkel zueinander einschließen, so daß der Lastenträgerfuß 16 von der Seite gesehen insgesamt im wesentlichen die Form eines Dreiecks aufweist (vergl. Fig. 3 und 4).

Gemäß den Fig. 2 und 3 sind die vorzugsweise aus einem metallischen Material gefertigten Halteelemente 20, 22 Blechteile, d.h. weisen in zwei senkrecht zueinander stehenden Richtungen deutlich größere Abmessungen auf (Fig. 3) als in einer dritten, zu den ersten beiden Richtungen senkrechten Richtung (Fig. 2). Während das in Fig. 3 linke Halteelement 20 an seinem oberen Ende mittels einer Mehrzahl von Verbindungspunkten 70 fest mit der Stirnwand 60 des Trägerkörpers 18 verbunden ist, ist das in Fig. 3 rechte Halteelement 22 mit seinem oberen Ende an der Stirnwand 60 des Trägerkörpers 18 verschwenkbar angelenkt, wozu an der Stirnwand 60 ein Gewindebolzen 72 angebracht ist, der sich durch eine Öffnung (nicht dargestellt) im Halteelement 22 hindurch erstreckt und auf den zur Sicherung des Halteelements 22 eine selbstsichernde Mutter 74 aufgeschraubt ist.

Die in den Figuren 2 und 3 oberen Enden der Halteelemente 20, 22 liegen der Stirnwand 60 flächig an. Im weiteren Verlauf der Halteelemente 20, 22 sind diese dann zunächst von der Stirnwand 60 weg und dann wieder auf diese zu abgewinkelt (Fig. 2), derart, daß die unteren Enden 76, 78 der Halteelemente 20, 22 planparallel in den Spalt 24 eintauchen können. Wie in Fig. 3 deutlich zu erkennen ist, sind die Halteelemente 20, 22 an ihren in den Spalt 24 eingreifenden unteren Enden 76, 78 spiegelsymmetrisch hakenartig ausgebildet und hintergreifen im befestigten Zustand des Lastenträgers 10 mit ihren hakenartig ausgebildeten unteren Enden 76, 78 die komplementär geformten Aussparungen 58 des Befestigungselements 28 in formschlüssiger Weise.

Weiterhin ist zwischen den Halteelementen 20, 22 eine Einrichtung 80 zum wahlweisen Ziehen des verschwenkbaren Halteelements 22 in Richtung des festen Halteelements 20 vorgesehen. Diese Stelleinrichtung 80 besteht aus einer Kopfschraube 82, einer zugeordneten Mutter 84 und einer Schraubendruckfeder 86. Die Kopfschraube 82 erstreckt sich durch Öffnungen (nicht dargestellt) hindurch, welche in Widerlagerböcken 88, 90 ausgebildet sind, die in geeigneter Weise fest am jeweiligen Halteelement 20 bzw. 22 angebracht sind. Gemäß Fig. 3 liegt dabei die Kopfschraube 82 mit ihrem Kopf an dem Widerlagerbock 90 des verschwenkbaren Halteelements 22 an, während das über den Widerlagerbock 88 des festen Halteelements 20 vorstehende Ende der Kopfschraube 82 in die am Widerlagerbock 88 drehfest angeordnete Mutter 84 eingedreht ist. Die Schraubendruckfeder 86 ist am Außenumfang der Kopfschraube 82 vorgesehen und stützt sich endseitig an den Widerlagerböcken 88, 90 der Halteelemente 20, 22 ab, um eine die Halteelemente 20, 22 auseinanderdrückende Kraft aufzubringen. Es ist ersichtlich, daß das verschwenkbare Halteelement 22 durch weiteres Eindrehen der Kopfschraube 82 in die Mutter 84 in Richtung des festen Halteelements 20 gezogen wird, während die Schraubendruckfeder 86 dafür sorgt, daß das verschwenkbare Halteelement 22 vom festen Halteelement 20 wegschwenkt, wenn die Kopfschraube 82 mit umgekehrtem Drehsinn wieder weiter aus der Mutter 84 herausgedreht wird.

Schließlich ist in den Fig. 2 und 3 noch eine Abdeckung 92 aus vorzugsweise Kunststoff dargestellt, die mittels eines nur schematisch angedeuteten Befestigungsmittels 94 lösbar an der Stirnwand 60 des Trägerkörpers 18 befestigt ist, um die Halteelemente 20, 22 und die Stelleinrichtung 80 zu verkleiden. Die Abdeckung 92 folgt hinsichtlich ihrer äußeren Form der Form des Trägerkörpers 18 und kann die gleiche Farbe wie das Fahrzeugdach 12 aufweisen.

Zur Montage des Lastenträgers 10 wird dieser von oben auf das Fahrzeug aufgesetzt, wobei die Halteelemente 20, 22 an den beidseitig der Quertraverse 14 vorgesehenen Lastenträgerfüßen 16 in den jeweiligen Spalt 24 eintauchen, bis das feste Halteelement 20 in Fig. 3 links vom Befestigungselement 28 und das verschwenkbare Halteelement 22 in Fig. 3 rechts vom Befestigungselement 28 am Auflageflansch 56 des Karosserierahmens 26 zur Anlage gelangt. Nun wird der Lastenträgerfuß 16 in Fig. 3 nach rechts bewegt bis das hakenartig ausgebildete untere Ende 76 des festen Halteelements 20 mit der entsprechenden Aussparung 58 des Befestigungselements 28 formschlüssig eingreift. In der Folge wird die Kopfschraube 82 der Stelleinrichtung 80 entgegen der Kraft der Schraubendruckfeder 86 in die Mutter 84 hineingedreht, wodurch das verschwenkbare Halteelement 22 in Richtung des Befestigungselements 28 verschwenkt bis es ebenfalls mit seinem hakenartig ausgebildeten unteren Ende 78 formschlüssig in die entsprechende Aussparung 58 des Befestigungselements 28 eingreift. Im Ergebnis ist der Lastenträgerfuß 16 fest mit dem Befestigungselement 28 verspannt. Zum Schluß wird die Abdeckung 92 am Trägerkörper 18 befestigt. Die Demontage des Lastenträgers 10 erfolgt in umgekehrter Reihenfolge, wobei die Schraubendruckfeder 86 beim Lösen der Stelleinrichtung 80 das verschwenkbare Halteelement 22 vom festen Halteelement 20 und damit das untere Ende 78 aus dem formschlüssigen Eingriff mit der entsprechenden Aussparung 58 des Befestigungselements 28 wegdrückt.

### Bezugszeichenliste

- 10: Lastenträger
- 12: Fahrzeugdach
- 14: Quertraverse
- 16: Lastenträgerfuß
- 18: Trägerkörper
- 20: Halteelement
- 22: Halteelement
- 24: Spalt
- 26: Karosserierahmen
- 28: Befestigungselement
- 30: Außenschale
- 32: Innenschale
- 34: Bezugsmaterial
- 36: obere Schicht
- 38: untere Schicht
- 40: unterer Flansch
- 42: innere Türdichtung
- 44: Türrahmen
- 46: äußere Türdichtung
- 48: Türscheibe
- 50: Aufkantung
- 52: Innengewindeabschnitt
- 54: Schraube
- 56: Auflageflansch
- 58: Aussparung
- 60: Stirnwand
- 62: untere Wand
- 64: obere Wand
- 66: Pufferelement
- 68: Seitenwand
- 70: Verbindungspunkt
- 72: Gewindebolzen
- 74: Mutter
- 76: unteres Ende
- 78: unteres Ende
- 80: Stelleinrichtung
- 82: Kopfschraube
- 84: Mutter
- 86: Schraubendruckfeder
- 88: Widerlagerbock
- 90: Widerlagerbock
- 92: Abdeckung
- 94: Befestigungsmittel

## Patentansprüche

1. Flächiges Karosserieteil (12) mit einem Lastenträger (10) für ein Fahrzeug, wobei das flächige Karosserieteil (12) eine tiefgezogene Außenschale (30) und eine der Außenschale (30) aufgeschäumte Innenschale (32) aus einem Schaumkunststoff aufweist und sich zwischen einem fahrzeugseitigen Karosserierahmen (26) und dem diesem zugeordneten flächigen Karosserieteil (12) ein Spalt (24) befindet, **gekennzeichnet durch** ein an der Innenschale (32) mit angeschäumtes Befestigungselement (28) zur lösbaren Befestigung des Lastenträgers (10), insbesondere Dachlastenträgers, an dem Fahrzeug, wobei der Lastenträger (10) einen Trägerkörper (18) aufweist, an dem zwei im nicht-befestigten Zustand des Lastenträgers (10) relativ zueinander bewegliche Halteelemente (20, 22) vorgesehen sind, die im befestigten Zustand des Lastenträgers (10) in den Spalt (24) eingreifen, wo sie das Befestigungselement (28) formschlüssig hintergreifen, welches am Karosserierahmen (26) festgelegt ist und somit auch der Befestigung des flächigen Karosserieteils (12) am Karosserierahmen (26) dient.

2. Karosserieteil (12) nach Anspruch 1, **dadurch gekennzeichnet, daß** das Befestigungselement (28) über eine äußere Aufkantung (50) der Außenschale (30) hinaus von dem Karosserieteil (12) in den Spalt (24) vorsteht.

3. Karosserieteil (12) nach Anspruch 1 oder 2, **dadurch gekennzeichnet, daß** das Befestigungselement (28) aus einem vorzugsweise metallischen Werkstoff besteht und mit mindestens einem Innengewindeabschnitt (52) versehen ist, in den eine im am Karosserierahmen (26) montierten Zustand des flächigen Karosserieteils (12) einen Flansch (56) des Karosserierahmens (26) durchgreifende Schraube (54) eingeschraubt ist.

4. Karosserieteil (12) nach einem der vorhergehenden Ansprüche, **dadurch gekennzeichnet, daß** die Halteelemente (20, 22) Blechteile sind, die an ihren in den Spalt (24) eingreifenden Enden (76, 78) hakenartig ausgebildet sind, wobei die hakenartig ausgebildeten Enden (76, 78) im befestigten Zustand des Lastenträgers (10) komplementär geformte Aussparungen (58) des Befestigungselements (28) formschlüssig hintergreifen.

5. Karosserieteil (12) nach einem der vorhergehenden Ansprüche, **dadurch gekennzeichnet, daß** das eine Halteelement (20) fest am Trägerkörper (18) angebracht ist, während das andere Halteelement (22) verschwenkbar am Trägerkörper (18) angelenkt ist, wobei eine Einrichtung (80) zum wahlweisen Ziehen des verschwenkbaren Halteelements (22) in Richtung des festen Halteelements (20) vorgesehen ist.

6. Karosserieteil (12) nach Anspruch 5, **dadurch gekennzeichnet, daß** jedes Halteelement (20, 22) ein Widerlager (88, 90) mit einer Öffnung hat und die Einrichtung (80) zum wahlweisen Ziehen des verschwenkbaren Halteelements (22) in Richtung des festen Halteelements (20) eine Kopfschraube (82) und eine Mutter (84) aufweist, wobei sich die Schraube (82) durch die Öffnungen der Widerlager (88, 90) hindurch erstreckt und mit ihrem Kopf an dem einen Widerlager (90) anliegt, während das über das andere Widerlager (88) vorstehende Ende der Schraube (82) in die am anderen Widerlager (88) drehfest angeordnete Mutter (84) eingedreht ist.

7. Karosserieteil (12) nach Anspruch 6, **dadurch gekennzeichnet, daß** am Außenumfang der Schraube (82) eine Schraubendruckfeder (86) angeordnet ist, die sich endseitig an den Widerlagern (88, 90) der Halteelemente (20, 22) abstützt, um eine die Halteelemente (20, 22) auseinanderdrückende Kraft aufzubringen.

8. Karosserieteil (12) nach einem der vorhergehenden Ansprüche, **dadurch gekennzeichnet, daß** die Halteelemente (20, 22) mittels einer lösbar am Trägerkörper (18) befestigten Abdeckung (92) aus vorzugsweise Kunststoff verkleidet sind.

9. Karosserieteil (12) nach einem der vorhergehenden Ansprüche, **dadurch gekennzeichnet, daß** der Trägerkörper (18) dem flächigen Karosserieteil (12) flächig aufliegt, wobei zwischen Trägerkörper (18) und Karosserieteil (12) vorzugsweise eine weiche Zwischenschicht aus beispielsweise Gummi vorgesehen ist.

10. Karosserieteil (12) nach einem der vorhergehenden Ansprüche, **dadurch gekennzeichnet, daß** eine Quertraverse (14) des Lastenträgers (10) über ein elastisches Pufferelement (66) am Trägerkörper (18) befestigt ist.

## Claims

1. Flat body part (12) with a load carrier (10) for a vehicle, wherein the flat body part (12) has a deep-drawn outer shell (30) and an inner shell (32) made of a plastic foam, applied on the outer shell (30), and wherein a gap (24) is located between a body frame (26) on the vehicle side and the flat body part (12) assigned thereto, **characterized by** a fastening element (28) for detachably fastening the load carrier (10), in particular roof rack, on the vehicle, said fastening element being applied to the inner shell (32) at the same time, wherein the load carrier (10) has a carrier frame (18) on which two retaining elements (20, 22) are fitted, said two retaining elements being moveable relative to one another when the load carrier (10) is in an unfastened condition, and engaging into the gap (24) when the load carrier (10) is in a fastened condition, where they engage with positive fit behind the fastening element (28) which is secured to the body frame (26) and thus also serves for fastening the flat body part (12) on the body frame (26).

2. Body part (12) according to claim 1, **characterized in that** the fastening element (28) projects from the body part (12) into the gap (24) over an outer edge (50) of the outer shell (30).

3. Body part (12) according to claim 1 or 2, **characterized in that** the fastening element (28) consists of a preferably metal material and is provided with at least one internal thread section (52), into which a screw (54) is screwed, which passes through a flange (56) of the body frame (26) when the flat body part (12) is mounted on the body frame (26).

4. Body part (12) according to one of the preceding claims, **characterized in that** the retaining elements (20, 22) are sheet metal parts shaped in the form of a hook at their ends (76, 78) which engage into the gap (24), wherein the hook shaped ends (76, 78) engage with positive fit behind complementarily formed recesses (58) of the fastening element (28) when the load carrier (10) is in the fastened condition.

5. Body part (12) according to one of the preceding claims, **characterized in that** one retaining element (20) is attached so as to be fixed on the carrier frame (18), whilst the other retaining element (22) is linked to the carrier frame (18) so that it can swivel, wherein a device (80) for selectively pulling of the swivelable retaining element (22) in the direction of the fixed retaining element (20) is provided.

6. Body part (12) according to claim 5, **characterized in that** each retaining element (20, 22) has an abutment (88, 90) with an opening, and the device (80) for selectively pulling of the swivelable retaining element (22) in the direction of the fixed retaining element (20) has a cap screw (82) and a nut (84), wherein the screw (82) passes through the openings of the abutments (88, 90) and lies with its head on one abutment (90), whilst the end of the screw (82) projecting over the other abutment (88) is screwed into the nut (84) which is fixed against rotation at the other abutment (88).

7. Body part (12) according to claim 6, **characterized in that** on the outer circumference of the screw (82) a coil spring (86) is arranged, which is supported at the ends on the abutments (88, 90) of the retaining elements (20, 22), in order to apply a force which presses the retaining elements (20, 22) apart.

8. Body part (12) according to one of the preceding claims, **characterized in that** the retaining elements (20, 22) are covered by means of a cover (92), preferably made of plastic, which is detachably fastened on the carrier frame (18).

9. Body part (12) according to one of the preceding claims, **characterized in that** the carrier frame (18) lies flat on the flat body part (12), wherein preferably a soft intermediate layer, made of rubber, for example, is placed between the carrier frame (18) and the body part (12).

10. Body part (12) according to one of the preceding claims, **characterized in that** a transverse tie bar (14) of the load carrier (10) is fastened via an elastic buffer element (66) on the carrier frame (18).

## Revendications

1. Partie surfacique de carrosserie (12) comportant un porte-charges (10) pour un véhicule, la partie surfacique de carrosserie (12) comprenant une coque extérieure emboutie (30) et une coque intérieure (32) rapportée par moussage sur la coque extérieure (30) et constituée de mousse de matière plastique, et un intervalle (24) se trouvant entre un cadre de carrosserie (26) côté véhicule et la partie surfacique de carrosserie (12) associée audit cadre, **caractérisée par** un élément de fixation (28) rapporté par moussage sur la coque intérieure (32) et destiné à la fixation détachable du porte-charges (10), en particulier du porte-charges de toiture, sur le véhicule, le porte-charges (10) comprenant un corps porteur (18) sur lequel sont prévus deux éléments de retenue (20, 22) qui sont mobiles l'un par rapport à l'autre dans l'état non fixé du porte-charges (10) et qui s'engagent, dans l'état fixé du porte-charges (10), dans l'intervalle (24) où ils engagent par l'arrière par coopération de formes l'élément de fixation (28) qui est immobilisé sur le cadre de carrosserie (26) et qui sert donc également à la fixation de la partie surfacique de carrosserie (12) sur le cadre de carrosserie (26).

2. Partie surfacique de carrosserie (12) selon la revendication 1, **caractérisée en ce que** l'élément de fixation (28) dépasse de la partie de carrosserie (12) jusque dans l'intervalle (24) au-delà d'un rebord extérieur (50) de la coque extérieure (30).

3. Partie surfacique de carrosserie (12) selon l'une ou l'autre des revendications 1 et 2, **caractérisée en ce que** l'élément de fixation (28) est constitué d'un matériau de préférence métallique et est pourvu d'au moins un tronçon taraudé (52) dans lequel est vissée une vis (54) qui, dans l'état monté de la partie surfacique de carrosserie (12) sur le cadre de carrosserie (26), traverse une bride (56) du cadre de carrosserie (26).

4. Partie surfacique de carrosserie (12) selon l'une des revendications précédentes, **caractérisée en ce que** les éléments de retenue (20, 22) sont des pièces en tôle dont les extrémités (76, 78) s'engageant dans l'intervalle (24) sont réalisées à la manière de crochets, et dans l'état fixé du porte-charges (10), les extrémités (76, 78) réalisées à la manière de crochets engagent par coopération de formes par l'arrière des échancrures (58) de forme complémentaire de l'élément de fixation (28).

5. Partie surfacique de carrosserie (12) selon l'une des revendications précédentes, **caractérisée en ce que** l'un des éléments de retenue (20) est agencé solidairement sur le corps porteur (18), tandis que l'autre élément de retenue (22) est articulé en pivotement sur le corps porteur (18), un dispositif (80) étant prévu pour tirer au choix l'élément de retenue pivotant (22) en direction de l'élément de retenue fixe (20).

6. Partie surfacique de carrosserie (12) selon la revendication 5, **caractérisée en ce que** chaque élément de retenue (20, 22) comprend une contre-butée (88, 90) pourvu d'une ouverture, et **en ce que** le dispositif (80) pour tirer au choix l'élément de retenue pivotant (22) en direction de l'élément de retenue fixe (20) comprend une vis à tête (82) et un écrou (84), la vis (82) traversant les ouvertures des contre-butées (88, 90) et prenant appui par sa tête contre l'une des contre-butées (90), tandis que l'extrémité de la vis (82) dépassant au-delà de l'autre contre-butée (88) est vissée dans l'écrou (84) agencé solidairement en rotation sur l'autre contre-butée (88).

7. Partie surfacique de carrosserie (12) selon la revendication 6, **caractérisée en ce qu'**à la périphérie extérieure de la vis (82) est agencé un ressort de compression hélicoïdal (86) qui prend appui du côté extrémité contre les contre-butées (88, 90) des éléments de retenue (20, 22), afin d'appliquer une force qui pousse les éléments de retenue (20, 22) en écartement.

8. Partie surfacique de carrosserie (12) selon l'une des revendications précédentes, **caractérisée en ce que** les éléments de retenue (20, 22) sont habillés au moyen d'un recouvrement (92) de préférence en matière plastique fixé de façon détachable sur le corps porteur (18).

9. Partie surfacique de carrosserie (12) selon l'une des revendications précédentes, **caractérisée en ce que** le corps porteur (18) prend appui à plat contre la partie surfacique de carrosserie (12), une couche intermédiaire de préférence souple par exemple en caoutchouc étant prévue entre le corps porteur (18) et la partie de carrosserie (12).

10. Partie surfacique de carrosserie (12) selon l'une des revendications précédentes, **caractérisée en ce qu'**une traverse (14) du porte-charges (10) est fixée sur le corps porteur (18) via un élément tampon élastique (66).
